# EUROPÄISCHE PATENTSCHRIFT

(11) **EP 0 479 041 B1**
(45) Veröffentlichungstag und Bekanntmachung des Hinweises auf die Patenterteilung: **30.08.1995**
(21) Anmeldenummer: 91115799.8
(22) Anmeldetag: 18.09.1991
(51) Int. Cl.: G03B 27/46

(54) **Fotografisches Rollenkopiergerät mit obenliegendem Papierlauf**
Photographic duplicating machine with overhead-run of the paper
Duplicateur photographique à guide supérieur de papier en bande

(30) Priorität: 01.10.1990 DE 4031024
(43) Veröffentlichungstag der Anmeldung: 08.04.1992
(73) Patentinhaber: Agfa-Gevaert AG, 51373 Leverkusen (DE)
(72) Erfinder: Findeis, Günter, Dipl.-Phys., W-8021 Sauerlach (DE); Nicko, Reinhard, Dipl.-Ing., W-8000 München 83 (DE); Schlick, Erich, Dipl.-Ing., W-8044 Lohhof (DE); Scholz, Reiner, W-8000 München 83 (DE)

(56) Entgegenhaltungen:
- DE-A- 4 003 838
- DE-B- 2 245 573
- DE-C- 2 518 670

## Beschreibung

Die Erfindung betrifft ein fotografisches Rollenkopiergerät nach dem Oberbegriff des Anspruchs 1.

Ein solches Gerät ist Z. B. aus der DE-PS 25 18 670 bekannt, die ein Rollenkopiergerät offenbar, in dem die Abwickelkassette für einen obenliegenden Papierlauf mittels eines motorbetriebenen Aufzugs in die obenliegende Abwickelposition befördert werden kann. Eine solche motorische Aufzugseinrichtung hat neben dem verhältnismäßig großen Aufwand und Platzbedarf an Standfläche den Nachteil, daß die Aufzugsbewegung aus Sicherheitsgründen verhältnismäßig langsam erfolgen muß. Ein solcher Aufwand ist allenfalls für Hochleistungsgeräte vertretbar, jedoch nicht für Rollenkopiergeräte einer mittleren Preisklasse, die für eine große Anzahl von Papierformaten einsetzbar sein sollen und dementsprechend breite und schwere Abwickelkassetten haben.

Aufgabe der Erfindung ist es, eine konstruktiv einfache Hilfseinrichtung zu schaffen, die die körperliche Beanspruchung beim Ansetzen von voll beladenen Abwickelkassetten an ein Rollenkopiergerät mit obenliegendem Papierlauf auf ein annehmbares Maß verringert.

Diese Aufgabe wird gelöst durch die im Anspruch 1 beschriebene Erfindung.

Die Erfindung geht aus von der Überlegung, daß auch für weniger kräftig gebaute Bedienungspersonen das Anheben der befüllten Abwickelkassetten etwa auf Brusthöhe noch verhältnismäßig leicht zu leisten ist. Zudem ist bis zu dieser Höhe eine visuelle Kontrolle der Bewegung gut möglich. Bei Anheben solch schwerer Lasten etwa bis in Augenhöhe ist jedoch eine Streckbewegung der Arme erforderlich, die sehr viel schwerer zu leisten ist und zudem wegen der Kassette im Augenbereich sehr viel schwerer zu kontrollieren ist. Durch die Erfindung wird die Kassette etwa in Brusthöhe angehoben und unter Sichtkontrolle mit den kassettenseitigen Halterungen an deren Hinterkante in die geräteseitigen Gegenstücke eingehängt und dann in einer mechanisch geführten Bewegung hochgeschwenkt in eine Höhe, die in der Höhenlage der Abwickelposition entspricht. Diese Schwenkbewegung ist nicht nur durch die Führung in der scharnierartigen Führungseinrichtung erleichtert; vielmehr wird die Hälfte des Kassettengewichtes von dem Scharniergelenk aufgenommen. Die zu leistende mechanische Arbeit bleibt zwar dieselbe, jedoch wird der Weg, den der Schwerpunkt der Kassette zurückzulegen hat, durch die Schwenkung gegenüber einer parallelen Anhebung vergrößert und somit der Kraftbedarf auf die Hälfte verringert.

Weitere Einzelheiten und Vorteile der Erfindung ergeben sich aus den Unteransprüchen im Zusammenhang mit der Beschreibung von Ausführungsbeispielen, die anhand von Figuren eingehend erläutert sind. Es zeigen:
- Fig. 1: ein erfindungsgemäß ausgestattetes Rollenkopiergerät in der Seitenansicht mit einer gerade eingehängten, noch in der unteren Lage befindlichen Abwickelkassette,
- Fig. 2: eine Abwickelkassette in der Frontansicht,
- Fig. 3: eine Einzelheit aus Fig. 1 im Bereich der scharnierartigen Anordnung bei unten liegender Kassette,
- Fig. 4: eine andere Ausgestaltung der Erfindung gegenüber Fig. 3 im Bereich der scharnierartigen Anordnung und
- Fig. 5: eine andere Ausführungsform der Erfindung mit seitlich am Rollenkopiergerät hochschwenkbarer Abwickelkassette.

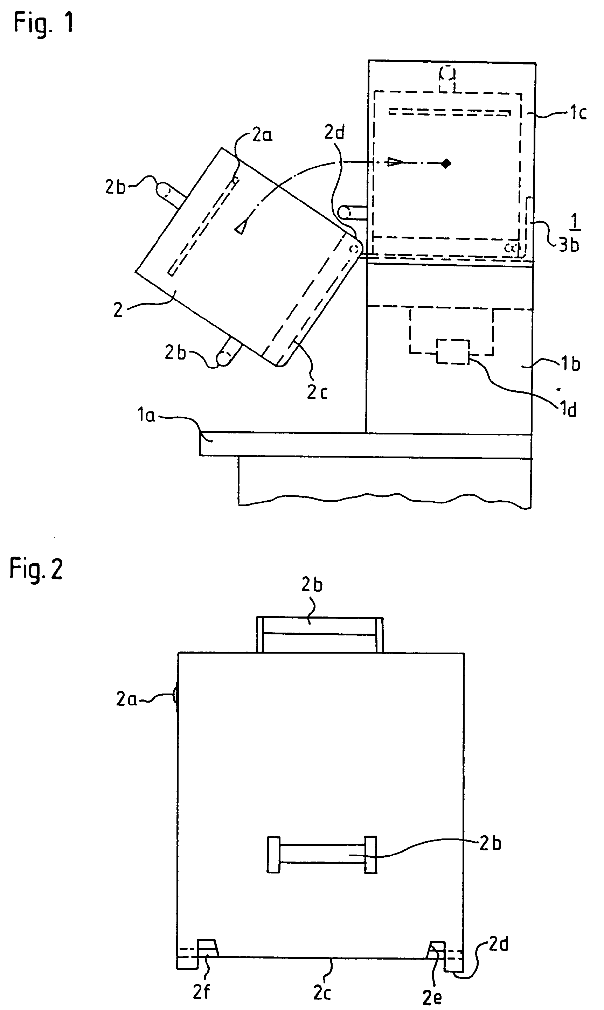

In Fig. 1 ist mit 1 ein Rollenkopiergerät mit obenliegendem Papierlauf bezeichnet, das im wesentlichen einen konventionellen Aufbau hat. Auf einem Tisch 1a, unter dem ein nicht gezeigtes Lampenhaus angeordnet ist, befindet sich eine nicht gezeigte Vorlagenbühne. Dort von unten durchleuchtete Kopiervorlagen werden in der Kopierstation 1d durch ein Objektiv abgebildet auf eine Papierbühne 1c, die sich zwischen einer Abwickelkassette 2 und einer nicht gezeigten Aufwickelkassette erstreckt. Der Papierlauf 1c ruht auf zwei Konsolen 1b am rechten und linken Seitenrand des Kopiergeräts, die das Bauteil mit dem Papierlauf tragen. Am Übergang von der Abwickelkassette 2 bzw. deren Ausziehmaul 2a befindet sich eine Einlauföffnung 1e, hinter der Transportrollen 1f angeordnet sind.

Für die Abwickelkassette ist innerhalb des Rollenkopiergeräts nach Fig. 1 eine lichtdicht verschließbare Ausnehmung vorgesehen, die in allen Abmessungen etwas größer als eine Abwickelkassette 2 ist.

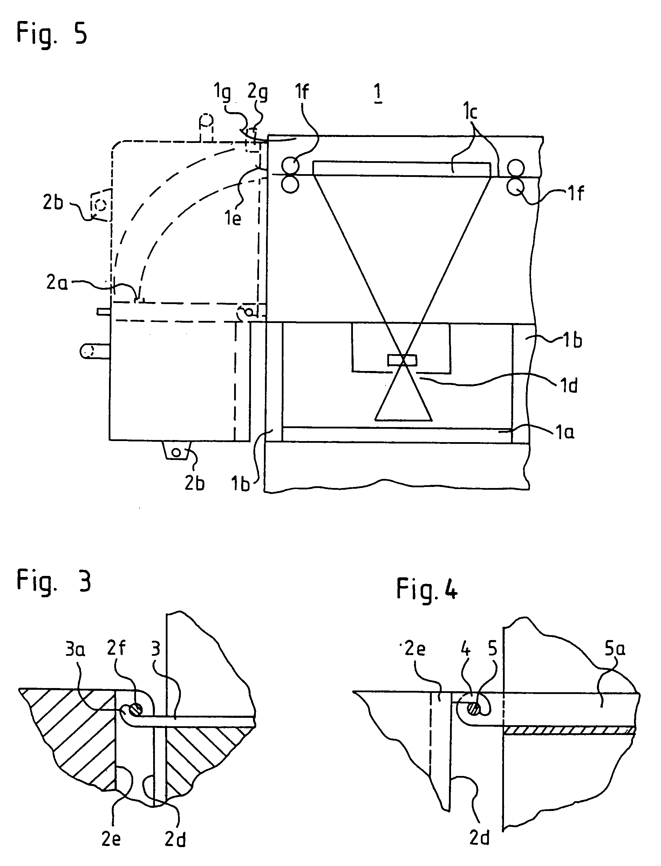

Einzelheiten der Abwickelkassette 2 ergeben sich aus den Fig. 2 und 3. Die Kassette hat im wesentlichen eine würfelförmige Gestalt, d. h. Höhe und Breite sind entsprechend dem Durchmesser der aufzunehmenden Materialbandrollen etwa gleich groß, während sich die Tiefe der Kassette an der Breite des breitesten aufzunehmenden Bandmaterials orientiert. Die Kassette weist ferner zwei Handgriffe 2b auf, von denen einer an der dem Kassettenboden (2c) gegenüberliegenden Oberseite befestigt ist, während der andere Handgriff an der während des Heranführens der Bedienungsperson zugekehrten Seite befestigt ist. Zur Befüllung mit Materialbandrollen ist die Kassette in bekannter, nicht dargestellter Weise in zwei durch ein Scharnier verbundene Hälften geteilt, so daß nach Lösen eines üblicherweise vorhandenen Riegels die obere Hälfte aufgeklappt und eine Materialbandrolle in die Kassette eingelegt werden kann. Das Ausziehmaul 2a kann gegen Lichteinfall in bekannter Weise durch zwei Rollen abgedichtet sein.

An der in der Abwickelposition unteren Seite der Kassette sind an den beiden Seitenrändern in Einschubrichtung verlaufende, über den Kassettenboden vorspringende Kufen 2d angeordnet. Diese Kufen sind an ihrer Unterseite entweder mit einem gut gleitfähigen Kunststoffbelag, z. B. aus Polytetrafluoräthylen, versehen oder ihre Gleitfläche an der Auflagefläche für die Kassette im Gerät 1 ist mit einem solchen Kunststoff belegt. Neben den Kufen weist der Kassettenboden parallel zu den Kufen verlaufende Aussparungen 2e auf, die sich über die ganze Kassettentiefe hinziehen. In der Breite und Höhe entsprechen diese Aussparungen der noch zu beschreibenden Scharnieranordnung.

Die Scharnieranordnung bei der Kassette gemäß Fig. 2 ist in Fig. 3 eingehender dargestellt. An der in Abwickelposition hinteren unteren Kante der Kassette 2 ist quer durch jede der Aussparungen 2e ein kreiszylindrischer Bolzen 2f geführt, der im Bereich der Aussparung 2e rundherum frei zugänglich ist. Unter den Aussparungen 2e der Kassette in Abwickelposition sind an dem Kopiergerät 1 Schienen 3 befestigt, an deren der Frontseite des Gerätes zugekehrtem Ende ein Haken 3a angeformt ist. Der Haken umgreift im eingehängten Zustand der Kassette den Bolzen 2f wenigstens auf einem Winkel von 90°. Die den Haken 3a tragende Schiene kann sich über die gesamte Gerätetiefe erstrecken und mit einem nach oben gebogenen Schenkel 3b zugleich als Anschlag für die einzuschiebende Kassette dienen.

Die Wirkungsweise der in den Fig. 1 bis 3 dargestellten Ausführungsform ist wie folgt: Die befüllte Kassette 2 wird von der Bedienungsperson - gehalten an den beiden Handgriffen 2b - mit obenliegendem Bolzen etwa in Brusthöhe gebracht und an das Kopiergerät herangeführt, wobei die Bolzen 2f mit den Haken 3a in Eingriff gebracht werden. Damit wird rund die Hälfte des Gewichtes der Kassette von dem Haken aufgenommen, so daß die Bedienungsperson während eines Hochschwenkvorgangs auf eine der Höhe der Abwickelposition entsprechende Höhe nur die Hälfte des Gewichtes der Kassette aufzunehmen hat. Dabei liegt der Schwerpunkt bei einer Lage der Kassette, die um 90° gegenüber der Abwickelposition verschwenkt ist, um eine ganze Kassettenhöhe unter der Soll-Lage. Für das Hochschwenken kann an dem unteren Handgriff nach vorne gezogen und an dem oberen Handgriff nach hinten gedrückt, d. h. ein Schwenkmoment ausgeübt werden, was für die Bedienungsperson angenehmer als eine reine Hubbewegung ist. Mit Erreichen der endgültigen Höhe kann dann die Kassette reibungsarm auf den Kufen in die Abwickelposition geschoben werden. Zweckmäßigerweise ist hierfür eine Verriegelung vorgesehen, damit die Kassette während des Kopiervorgangs ihre Lage nicht verändert. Schließlich kann durch eine geeignete, in den Figuren nicht dargestellte Tür die Ausnehmung im Gehäuse des Rollenkopiergerätes für die Kassette 2 lichtdicht verschlossen werden.

Die Rollen von gerätefestem Haken 3a und kassettenfestem Bolzen 2f können - wie in Fig. 4 gezeigt - auch vertauscht werden. Hier ist der Haken 4 an der entsprechenden Kante der Kassette 2 angeformt, während der Bolzen 5 gerätefest in einem U-förmigen Bügel 5a angeordnet ist. Hier wird im Zuge des Einsetzens der Kassette der Haken 4 in den Bolzen 5 eingehängt und die Kassette nach oben geschwenkt. Auch hier ist durch die Geometrie der das Scharnier bildenden Teile ein Herausrutschen der Kassette nach vorne zur Bedienungsperson hin unmöglich gemacht.

Eine andere Ausführungsform der Erfindung ist in Fig. 5 dargestellt. Hier ist die scharnierförmige Anordnung mit einer Achse parallel zur Achse des Materialbandwickels in der Kassette seitlich am Kopiergerät angebracht, so daß die Kassette von der unteren Einhängeposition in die obere Abwickelposition nur hochgeschwenkt zu werden braucht. In dieser Position ist an der Oberseite des Rollenkopiergerätes eine Schnappfederanordnung 1g angebracht, die mittels eines kassettenseitigen Bolzens 2g die Kassette 2 lösbar verriegelt. In dieser Position kommt gerade das Ausziehmaul 2a der Kassette zur Deckung mit der Einlauföffnung 1e des Rollenkopiergerätes.

Eine weitere Ausführungsform der Erfindung stellt eine Kombination der Fig. 1 und 5 dar. Der Raum für die Aufnahme der Aufwickelkassette gemäß Fig. 1 hat seine Öffnung zum Einführen der Kassette nicht an der Vorderseite des Gerätes, sondern in der Seitenwand. Die entsprechende Öffnung ist ebenfalls durch eine Tür verschließbar. Die Scharnieranordnung für das Hochschwenken der Kassette ist gegenüber der Ausführungsform nach Fig. 5 um eine Kassettenbreite nach links verschoben, so daß der Einhängvorgang am linken Seitenrand des Raumes für die Aufnahme der Kassette erfolgt. Die seitliche Einführung der Kassette erfordert zwar, daß seitlich vom Gerät genügend Platz für das Herantreten der Bedienungsperson freigehalten wird; das Einhängen der Kassette wird jedoch nicht durch einen vorragenden Tisch 1a erschwert. Im übrigen ist das Einhängen, Hochschwenken und Einschieben der Kassette in gleicher Weise durchzuführen wie bei der Ausführungsform nach Fig. 1.

Bei Rollenkopiergeräten, die mit einer Entwicklungsmaschine zu einem sogenannten Minilab kombiniert sind, gibt es keine Aufwickelkassetten. Im Fall von Aufwickelkassetten, die größere Längen belichteten Papierbandes für eine getrennte Entwicklungsmaschine aufzunehmen haben, ist selbstverständlich für die dann beim Entnehmen zu bewältigenden größeren Gewichte die beanspruchte Scharnieranordnung von großem Vorteil; die entsprechende Ausgestaltung von Gerät und Aufwickelkassetten bleibt im Schutzbereich dieser Erfindung.

## Patentansprüche

1. Fotografisches Rollenkopiergerät mit obenliegendem Papierlauf und mit Abwickelkassetten, aus denen das Rollenpapier einer Kopierstation zugeführt wird und mit einer Einrichtung zum Erleichtern des Anhebens der Abwickelkassetten in eine Abwickelposition, dadurch gekennzeichnet, daß die Abwickelkassette (2) an einer ihrer in der Abwickelposition unten liegenden Kanten Halterungen aufweist, die mit entsprechenden Gegenstücken an dem Rollenkopiergerät (1) ein Scharnier (2f, 3; 4, 5) bilden, dessen Teile in einer gegenüber der Abwickelposition um die Scharnierachse um wenigstens 60° nach unten verschwenkten Position der Kassette ineinander einhängbar sind, daß die Kassette (2) um dieses Scharnier (2f, 3; 4, 5) auf eine der Abwickelposition entsprechende Höhe hochschwenkbar ist und daß die Kassette (2) in der hochgeschwenkten Position in die stabile Abwickelposition überführbar ist.

2. Fotografisches Rollenkopiergerät nach Anspruch 1, dadurch gekennzeichnet, daß die kassettenseitigen Halterungen als in der Scharnierachse liegende Bolzen (2f) ausgebildet sind und daß die geräteseitigen Gegenstücke als Haken (3) ausgebildet sind, die die Bolzen in der eingehängten Lage auf der dem Gerät abgewandten Seite auf wenigstens 90° umgreifen.

3. Rollenkopiergerät nach Anspruch 1 oder 2, dadurch gekennzeichnet, daß die Kassette (2) seitlich der kassettenseitigen Halterungen (2f; 4) senkrecht zur Scharnierachse verlaufende Kufen (2d) aufweist, die mit besonders gleitfähigem Kunststoff belegt sind oder auf solchem gleiten, daß die geräteseitigen Scharnierteile (3; 5), insbesondere Haken (3) im Bereich der Aufnahmeöffnung für die Kassette angebracht sind und die Kassette (2) nach dem Hochschwenken auf eine der Abwickelposition entsprechende Höhenlage in die Abwickelposition verschiebbar ist.

4. Rollenkopiergerät nach einem der vorangehenden Ansprüche, dadurch gekennzeichnet, daß die Scharnierachse parallel zur Bandlaufrichtung in der Kopierbühne verläuft und die Kassette (2) quer zur Bandlaufrichtung in die Abwickelposition einschiebbar ist.

5. Rollenkopiergerät nach einem der Ansprüche 1 bis 3, dadurch gekennzeichnet, daß die Scharnierachse parallel zur Achse des Bandwickels in der Kassette (2) verläuft und die Kassette senkrecht zur Achse des Bandwickels in der Kassette in die Abwickelstellung und an die Einlauföffnung (1e) für das Materialband heranschiebbar ist.

6. Rollenkopiergerät nach einem der vorangehenden Ansprüche, dadurch gekennzeichnet, daß der Kassettenboden (2c) im Bereich der geräteseitigen Scharnierteile (3; 5) deren Umriß entsprechende, in Einschubrichtung durchgehende Aussparungen aufweist.

7. Rollenkopiergerät nach einem der vorangehenden Ansprüche, dadurch gekennzeichnet, daß die Kassette (2) an der Deck- und Frontseite mit Haltegriffen (2b) versehen ist, die einklappbar sind, daß über die Geräteaußenwand vorspringende Scharnierteile (3; 5) gegen Federkraft in das Gerät einschiebbar und daß der Raum im Gerät zur Aufnahme der Kassette mit einer Türe lichtdicht verschließbar ist.

8. Rollenkopiergerät nach einem der Ansprüche 1 bis 3, dadurch gekennzeichnet, daß die Scharnierachse parallel zur Achse des Materialbandwickels in der Kassette verläuft und das Ausziehmaul (2a) der Kassette (2) direkt an die Einlauföffnung (1e) für das Materialband am Gerät (1) anschwenkbar und die Kassette (2) in dieser Lage verriegelbar ist.

## Claims

1. Web-fed projection printer having an overhead paper run and having take-off cassettes, from which the web of paper is fed to a printing station, and having a device for facilitating lifting of the take-off cassettes into a take-off position, characterized in that the take-off cassette (2), at one of its edges situated below in the take-off position, has mountings which with corresponding counterparts on the web-fed projection printer (1) form a hinge (2f, 3; 4, 5), whose parts may be suspended one in the other when the cassette is in a position in which it is swivelled about the hinge axis through at least 60° in a downward direction relative to the take-off position, that the cassette (2) may be swivelled about said hinge (2f, 3; 4, 5) up to a height corresponding to the take-off position and that the cassette (2) in the swivelled-up position may be transferred into the stable take-off position.

2. Web-fed projection printer according to claim 1, characterized in that the mountings on the cassette take the form of pins (2f) lying in the hinge axis and that the counterparts on the printer take the form of hooks (3) which at the side remote from the printer engage at least 90° around the pins in the suspended position.

3. Web-fed projection printer according to claim 1 or 2, characterized in that the cassette (2), laterally of the mountings (2f; 4) on the cassette, has runners (2d) extending at right angles to the hinge axis, said runners being coated with a plastic material with good sliding properties or sliding on such a material, that the hinge parts (3; 5), in particular hooks (3), disposed on the printer are provided in the region of the receiving opening for the cassette and the cassette (2), after being swivelled up to a level corresponding to the take-off position, is displaceable into the take-off position.

4. Web-fed projection printer according to one of the preceding claims, characterized in that the hinge axis extends parallel to the running direction of the strip in the printing stage and the cassette (2) is insertable at right angles to the strip running direction into the take-off position.

5. Web-fed projection printer according to one of claims 1 to 3, characterized in that the hinge axis extends parallel to the axis of the strip reel in the cassette (2) and the cassette may be fed at right angles to the axis of the strip reel in the cassette into the take-off position and against the inlet opening (le) for the strip material.

6. Web-fed projection printer according to one of the preceding claims, characterized in that the cassette base (2c) in the region of the hinge parts (3; 5) on the printer has recesses, which extend continuously in insertion direction and correspond to the contour of said hinge parts.

7. Web-fed projection printer according to one of the preceding claims, characterized in that the cassette (2) at the top and front is provided with handles (2b) which may be folded in, that hinge parts (3; 5) which project beyond the outer wall of the printer are insertable counter to spring force into the printer and that the space in the printer for receiving the cassette is closable in a light-proof manner by a door.

8. Web-fed projection printer according to one of claims 1 to 3, characterized in that the hinge axis extends parallel to the axis of the reel of strip material in the cassette and the withdrawal opening (2a) of the cassette (2) may be swivelled directly against the inlet opening (1e) for the strip material in the printer (1) and the cassette (2) is lockable in said position.

## Revendications

1. Tireuse photographique à rouleaux comprenant un couloir de papier en position haute et des cassettes débitrices à partir desquelles le papier en rouleau est acheminé à un poste de tirage, et comprenant un dispositif destiné à faciliter l'élévation des cassettes débitrices à une position de déroulement, caractérisée en ce que la cassette débitrice (2) présente, à l'un de ses bords situé en bas dans la position de déroulement, des supports qui forment, avec des éléments conjugués correspondants portés par la tireuse à rouleaux (1), une charnière (2f, 3 ; 4, 5) dont les parties peuvent être accrochées l'une à l'autre dans une position de la cassette qui est rabattue d'au moins 60° vers le bas, autour de l'axe de la charnière, par rapport à la position de déroulement, en ce que la cassette (2) peut être relevée à une hauteur correspondant à la position de déroulement, par pivotement autour de cette charnière (2f, 3 ; 4, 5), et en ce que, dans la position relevée, la cassette (2) peut être transférée à la position de déroulement stable.

2. Tireuse photographique à rouleaux selon la revendication 1, caractérisée en ce que les supports solidaires de la cassette sont constitués par des broches (2f) situées dans l'axe de la charnière et en ce que les éléments conjugués solidaires de l'appareil sont constitués par des crochets (3) qui, dans la position accrochée, embrassent les broches sur au moins 90° sur le côté qui est à l'opposé de l'appareil.

3. Tireuse à rouleaux selon la revendication 1 ou 2, caractérisée en ce que la cassette (2) présente, latéralement aux supports (2f ; 4), des patins (2d) qui s'étendent perpendiculairement à l'axe de la charnière, qui sont garnis d'une matière plastique particulièrement glissante ou glissent sur une telle matière plastique, en ce que les parties (3 ; 5) de la charnière qui sont solidaires de l'appareil, en particulier des crochets (3), sont agencés dans la région de l'ouverture de réception de la cassette et, après que la cassette a été relevée par pivotement à un niveau correspondant à la position de déroulement, la cassette (2) peut être placée dans la position de déroulement par un mouvement de translation.

4. Tireuse à rouleaux selon une des revendications précédentes, caractérisée en ce que l'axe de la charnière s'étend parallèlement à la direction du défilement de la bande dans la plate-forme de tirage, et la cassette (2) peut être encastrée dans la position de déroulement par un mouvement transversal à la direction du défilement de la bande.

5. Tireuse à rouleaux selon une des revendications 1 à 3, caractérisée en ce que l'axe de la charnière s'étend parallèlement à l'axe du rouleau de bande contenu dans la cassette (2) et la cassette peut être amenée par une translation perpendiculaire à l'axe du rouleau de bande contenu dans la cassette, à la position de déroulement et contre l'ouverture d'entrée (1e) de la bande de matière.

6. Tireuse à rouleaux selon une des revendications précédentes, caractérisée en ce que le plancher (2c) de la cassette présente dans la région des parties (3, 5) de la charnière qui sont solidaires de l'appareil, des évidements traversants dans le sens de l'encastrement qui correspondent au contour de ces parties de la charnière.

7. Tireuse à rouleaux selon une des revendications précédentes, caractérisée en ce que, sur le côté du plafond et le côté avant, la cassette (2) est munie de poignées de retenue (2b) rabattables, en ce que des parties (3, 5) de la charnière qui font saillie au-delà de la paroi extérieure de l'appareil peuvent être encastrées dans l'appareil en surmontant la force d'un ressort et en ce que l'espace situé à l'intérieur de l'appareil et destiné à recevoir la cassette peut être obturé à joint étanche à la lumière au moyen d'une porte.

8. Tireuse à rouleaux selon une des revendications 1 à 3, caractérisée en ce que l'axe de la charnière s'étend parallèlement à l'axe du rouleau de bande de matière contenue dans la cassette et la bouche d'extraction (2a) de la cassette (2) peut être appliquée directement contre l'ouverture d'entrée (1e) de la bande de matière prévue dans l'appareil (1), et la cassette (2) peut être verrouillée dans cette position.
